# EUROPÄISCHE PATENTANMELDUNG

(11) **EP 2 689 831 A1**
(43) Veröffentlichungstag der Anmeldung: **29.01.2014**
(21) Anmeldenummer: 12005446.5
(22) Anmeldetag: 26.07.2012
(51) Int. Cl.: B01F 7/00, B66D 3/18, C12M 1/00

(54) **Biogasanlage**

(71) Anmelder: Niederbacher, Michael, 39031 Bruneck (IT)
(72) Erfinder: Niederbacher, Michael, 39031 Bruneck (IT)
(74) Vertreter: Liebl, Thomas

(57) **Zusammenfassung**

Die Erfindung betrifft eine Biogasanlage mit einem Fermenterbehälter (1), in dem ein Aggregatträger (2), vorzugsweise vertikal ausgerichtet, gelagert ist, wobei ein Aggregat (10), insbesondere ein Tauchmotorrührgerät, mittels einer Höhenverstelleinrichtung (11) höhenverstellbar an dem Aggregatträger (2) gehaltert ist. Erfindungsgemäß weist die Höhenverstelleinrichtung (11) eine Zugkette auf, die über wenigstens ein drehbar gelagertes Antriebsrad (15) geführt ist und die mit dem Aggregat (10) dergestalt verbunden ist, dass das Aggregat (10) bei einer Drehbetätigung des Antriebsrades (15) in eine erste Richtung nach oben gezogen wird und bei einer Drehbetätigung des Antriebsrades (15) in eine zweite, entgegengesetzte Richtung nach unten abgesenkt wird, wobei bevorzugt vorgesehen ist, dass die Zugkette durch eine lediglich eindimensional bewegliche Gelenkkette (13) gebildet ist.

## Beschreibung

Die Erfindung betrifft eine Biogasanlage nach dem Oberbegriff des Anspruchs 1.

Biogasanlagen mit einem Fermenterbehälter, in dem ein Aggregatträger, vorzugsweise vertikal ausgerichtet, gelagert ist, sind allgemein bekannt. An dem Aggregatträger ist regelmäßig ein Aggregat, insbesondere ein Tauchmotorrührgerät, mittels einer Höhenverstelleinrichtung höhenverstellbar gehaltert.

Aus der EP 0 894 525 B1 ist bereits eine Höhenverstelleinrichtung für ein Tauchmotorrührgerät bekannt, wobei die Höhenverstelleinrichtung hier als Seilwinde ausgebildet ist, die eine mit dem Aggregatträger fest verbundene Seiltrommel mit horizontaler Seiltrommelwelle aufweist. Weiter ist ein einerseits mit dem Aggregat verbundenes und andererseits auf die Seiltrommel aufwickelbares Seil vorgesehen, wobei die Seiltrommel innerhalb des Fermenterbehälters angeordnet ist, so dass keine gasdichte Seildurchführung durch eine Behälterwand erforderlich ist. Der Seiltrommel ist ein Seiltrommelantrieb zugeordnet, die durch eine außerhalb des Behälters angeordnete Betätigungseinrichtung betätigbar ist.

Eine derartige Seilwinde als Höhenverstelleinrichtung weist eine Reihe von Nachteilen auf: So zum einen den Nachteil, dass das Seil in einem Fermenterbehälter geführt und aufgenommen ist, der mit zu fermentierende Stoffe bzw. Flüssigkeiten sowie Gase enthält, die für das regelmäßig als Stahlseil ausgebildete Seil ein stark korrosives Medium darstellen. Die Korrosionsgefahr wird zudem noch dadurch erhöht, dass bei auf die Seiltrommel aufgewickeltem Seil mehrere Seillagen dicht aneinander gepresst und kraftbeaufschlagt durch das am Seil hängende Aggregat aufgewickelt sind, was zum einen zu einer starken mechanischen Seilbeanspruchung, zum Beispiel zu Seileinrissen durch Scheuern etc., führt und zudem auch die Korrosionsgefahr für die einzelnen aneinanderliegenden Seilbereiche wesentlich erhöht. Diese im Laufe der Zeit fortschreitende mechanische Beanspruchung und Korrosion des Seils führt letztendlich dazu, dass es regelmäßig zu Seilbrüchen kommt, wodurch dann das daran gehaltene Aggregat in unerwünschter Weise nach unten auf den Boden des Fermenterbehälters absackt. Dies hat letztendlich zur Folge, dass der Betrieb des Fermenterbehälters und damit der gesamten Biogasanlage gestoppt werden muss und das Aggregat auf aufwändige Weise geborgen werden muss. Dies kann zum Beispiel durch den Einsatz von Tauchern erfolgen, was aber sicherheitstechnisch äußerst bedenklich ist. In der Praxis wird daher in einem solchen Schadensfall normalerweise der Fermenterbehälter entleert, anschließend geputzt, weil sich Sedimente oder Sinkschichten am Fermenterboden ablagern. Vor diesen Arbeiten muss der Behälter zudem belüftet werden, um das immer noch produzierte Biogas zu entfernen, damit dieses die Arbeiter nicht beeinträchtigt. Es ist daher in einem solchen Schadensfall mit einem erheblichen Produktionsausfall zu rechnen, da nach Behebung des Schadens die gesamte Biologie wieder neu aufgebaut und gestartet werden muss. Dies bedeutet im Schadensfall regelmäßig einen Stillstand der Anlage von zwei oder drei Monaten, was für eine Biogasanlage mitunter auch das finanzielle Aus bedeuten kann.

Weiter hat das Seil den Nachteil, dass es aufgewickelt werden muss und deshalb bei großen Seillängen auch eine relativ große Seiltrommel benötigt wird, die regelmäßig nicht durch Standard-Serviceöffnungen bzw. Standard-Serviceschächte passt.

Beim Seil werden zudem Schmutzstoffe, wie zum Beispiel langfaseriges Material etc. mit hochgezogen und wickeln sich um die Seiltrommel herum. Dies führt dann zu Verstopfungen und gegebenenfalls sogar zum Verlust der Höhenverstellung.

Ein weiterer wesentlicher Nachteil einer derartigen Seilwinde als Höhenverstelleinrichtung ist, dass das Seil ein nicht formstabiles, biegeschlaffes Bauteil ist, das nicht in der Lage ist, die gewünschte Führungsstabilität beim Absenken und Anheben des Aggregates zur Verfügung zu stellen, wodurch es insbesondere beim Durchstoßen der Schwimmschichten bzw. Schaumschichten des Fermenterbehälters regelmäßig zu Absenkproblemen kommt, da diese Schwimm- bzw. Schaumschichten oftmals so dicht sind, dass die Gefahr besteht, dass das Aggregat selbst in einem gewissen Maße "aufschwimmt" und dadurch nicht in der gewünschten Weise schnell und funktionssicher abgesenkt werden kann. Dadurch dass das Seil relativ "leicht" ist, besteht zudem die Gefahr, dass es vom Flügel durch den Sog, der hinter dem Rührwerk entsteht, angesaugt wird. Das Seil läuft damit Gefahr, bei einem unkontrolliertem Absenken, bei dem das Aggregat zum Beispiel in einer Schwimmschicht stecken bleibt, angesaugt zu werden und in den Flügel zu geraten. Das hat zur Folge, dass nicht nur das Seil reißen kann (was zu den bereits zuvor beschriebenen Nachteilen führt), sondern dass auch das Aggregat selbst beschädigt werden kann, indem zum Beispiel der oder die Flügel vorne abreißen; oder aber das Aggregat zieht sich nach vorne oben und schlägt gegen den eigenen Mast.

Falls das Aggregat abreißt und nach unten absackt bzw. abfällt, besteht zudem die Gefahr, dass es in eventuell vorhandene Heizungsrohre gelangt oder gegen die Mauer und/oder andere Einbauteile schlägt.

Zudem erlaubt ein derartiges biegeschlaffes Seil keine vollständige Durchmischung des Behälters.

Ersichtlich stellt daher die Ausbildung einer Höhenverstelleinrichtung als Seilwinde mit mechanisch hoch beanspruchten Seillagen, bei der die Seiltrommel und das darauf aufwickelbare Seil zudem im Fermenterbehälterinnenraum angeordnet und damit dauerhaft einem korrosiven Medium bzw. einer korrosiven Atmosphäre ausgesetzt ist, ein erhebliches Gefahrenpotential für einen dauerhaften funktionssicheren Betrieb der Höhenverstelleinrichtung und damit des Fermenterbehälters und damit wiederum der gesamten Biogasanlage dar. Dieser Gefahr kann nur dadurch begegnet werden, dass das Zugseil im Rahmen von Servicearbeiten regelmäßig ausgetauscht wird, was für den Biogasanlagenbetreiber ersichtlich äußerst aufwändig ist.

Es ist daher Aufgabe der vorliegenden Erfindung, eine Biogasanlage mit einem Fermenterbehälter zur Verfügung zu stellen, mittels dem die Aggregatverstellung entlang eines Aggregatträgers im Fermenterbehälter auf einfache und funktionssichere Weise auch über einen längeren Zeitraum bewerkstelligt werden kann.

Diese Aufgabe wird gelöst mit den Merkmalen des Patentanspruchs 1. Vorteilhafte Ausgestaltungen hierzu sind Gegenstand der darauf rückbezogenen Unteransprüche.

Gemäß Patentanspruch 1 wird eine Biogasanlage mit einem Fermenterbehälter vorgeschlagen, in dem ein Aggregatträger, vorzugsweise vertikal ausgerichtet, gelagert ist, wobei ein Aggregat, insbesondere ein Tauchmotorrührgerät, mittels einer Höhenverstelleinrichtung höhenverstellbar an dem Aggregatträger gehaltert ist. Erfindungsgemäß weist die Höhenverstellvorrichtung eine Zugkette auf, die über wenigstens ein drehbar gelagertes Antriebsrad, das beispielsweise durch ein Kettenrad, zum Beispiel durch eine Kettennuss, gebildet ist, geführt ist und die mit dem Aggregat dergestalt verbunden ist, dass das Aggregat bei einer Drehbetätigung des Antriebsrades in eine erste Richtung nach oben gezogen wird und bei einer Drehbetätigung des Antriebsrades in eine zweite, entgegengesetzte Richtung nach unten abgesenkt wird. Diese Zugkette kann grundsätzlich durch jede geeignete und insbesondere stabile Kette gebildet sein, zum Beispiel durch eine mehrdimensional bewegliche Kette, wie beispielsweise eine Gliederkette, und hier zum Beispiel eine Rundgliederkette, oder kann alternativ und besonders bevorzugt durch eine lediglich eindimensional bewegliche Gelenkkette gebildet sein, die zum Beispiel durch eine Rollenkette oder durch eine Buchsenkette oder durch eine Bolzenkette oder dergleichen Gelenkketten gebildet sein kann.

Mit einem derartigen Aufbau lässt sich auf vorteilhafte Weise die Bruchgefahr hinsichtlich des Zugmittels deutlich verringern, da eine derartige erfindungsgemäß eingesetzte Zugkette, insbesondere eine Gelenkkette als Zugkette, ausreichend stabil ausgeführt werden kann, so dass die Zugkette auch im leicht korrodierten Zustand noch eine solche ausreichende Festigkeit aufweist, um ein Aggregat im Medium des Fermenterbehälters funktionssicher und zuverlässig anheben und absenken zu können. Des Weiteren braucht eine derartige Zugkette nicht auf eine Seiltrommel aufgewickelt werden, sondern kann diese einfach mit ihrem freien Ende auf der dem Antriebsaggregat gegenüberliegenden Seite des bevorzugt durch ein Kettenrad gebildeten Antriebsrades herunterhängen bzw. vorzugsweise dort lediglich in einem Kettenspeicher aufgenommen werden, was nachfolgend noch näher erläutert wird. Anders als bei einem auf einer Seiltrommel aufgewickelten Seil ist zudem der nicht benötigte freie Kettenbereiche nicht kraftbeaufschlagt und damit eng zusammen- und aneinandergepresst, so dass die mechanische Beanspruchung und auch der Korrosionsangriff auf die Zugkette deutlich vermindert ist.

Ein weiterer wesentlicher Vorteil der erfindungsgemäßen Lösung ist, dass eine Zugkette, insbesondere eine in der Art einer Fahrradkette ausgebildete eindimensional bewegliche Gelenkkette als Zugkette, in definierten Richtungen formstabil ist und somit anders als ein biegeschlaffes Seil eine gewisse Führungsstabilität zur Verfügung stellt, die in Verbindung mit insbesondere dem Absenken eines Aggregats von Vorteil ist, da hierdurch die sich im Fermenterbehälter eventuell ausbildenden Schwimm- bzw. Schaumschichten einfacher durchdrungen werden können und ein Auswandern des Aggregates zuverlässig vermieden werden kann. Insgesamt verleiht daher eine derartige Zugkette, insbesondere eine eindimensional bewegliche Gelenkkette als Zugkette, dem Aufbau insgesamt eine größere Stabilität.

Die Zugkette, insbesondere in Form einer in definierte Richtungen formstabilen Kette, hat weiter noch den Vorteil dass bei einem unkontrollierten Absenken des Aggregates, zum Beispiel eines Rühraggregates, zum Beispiel beim Vorhandensein einer Schwimmschicht keine mit einer Seilerschlaffung vergleichbare Kettenerschlaffung auftreten kann. Denn wenn die Kette so eingebaut wird, dass die Formstabilität zum Beispiel um 90 Grad zur Rührrichtung versetzt ist, kann zuverlässig verhindert werden, dass die Kette durch den Rührsog des zum Beispiel Rühraggregates als Aggregat angezogen wird, zum Beispiel hinten von einem Flügel angezogen wird. Dadurch kann die Kette auch bei einem unkontrolliertem Absenken eines Aggregates, zum Beispiel bei Vorhandensein einer Schwimmschicht, bei der das Aggregat mehr oder weniger "steckenbleibt", nicht in den Bereich des Aggregates, zum Beispiel dessen Rührflügel, gelangen und können daher große Schäden vermieden werden.

Des weiteren kann ein Seil bei einem unkontrolliertem Absenken, will man es wieder aufrollen, eine Seiltrommel verfehlen und ist es dann nicht mehr möglich, das Aggregat wieder heraufzuziehen. Es muss somit der Behälter geöffnet werden. Mit einer Zugkette ist jedoch sichergestellt, dass diese immer in Eingriff mit dem für einen formschlüssigen Eingriff bevorzugt als Kettenrad ausgeführten Antriebsrad steht. Außerdem ist die Zugkette bei einer Ausführung als Gelenkkette in einer Richtung formstabil, was auf einfache Weise zur stabilen Spurführung der Zugkette über das Antriebsrad ausgenutzt werden kann.

Mit der erfindungsgemäßen Lösung wird somit ein gegenüber der EP 0 894 525 B1 vollkommen neues und auf einem anderen Funktions- und Wirkprinzip beruhendes Konzept einer Höhenverstelleinrichtung in Verbindung mit Fermenterbehältern von Biogasanlagen zur Verfügung gestellt.

An dieser Stelle sei ausdrücklich erwähnt, dass die Begrifflichkeit "Fermenterbehälter" als Oberbegriff für sämtliche Behälter einer Biogasanlage steht, in denen ein Aggregat höhenverstellbar gelagert sein kann; insofern ist der Begriff "Fermenterbehälter" hier weit und umfassend auszulegen.

Gemäß einer besonders bevorzugten konkreten Ausgestaltung der vorliegenden Erfindungsidee wird vorgeschlagen, dass die einzelnen Gelenkachsen der als Gelenkkette ausgebildeten Zugkette im Wesentlichen achsparallel zur Drehachse des Antriebsrades ausgebildet sind, so dass die Gelenkkette in der gewünschten Weise in den beiden anderen Richtungen eine gewisse Formstabilität und Steifigkeit aufweist, die dazu beiträgt, die Führungsstabilität der Höhenverstelleinrichtung beim Absenken und Anheben des Aggregats zu verbessern.

Wie bereits zuvor erwähnt, kann das freie Kettenende der Zugkette grundsätzlich frei herunterhängend vom Kettenrad ausgeführt sein, gegebenenfalls auch entsprechend abgeschirmt bzw. geführt mittels Abschirm- und/oder Leitelementen, wie beispielsweise Abschirm- und/oder Leitblechen. Besonders bevorzugt ist jedoch eine Ausgestaltung, bei der dem Kettenrad, vorzugsweise ein am Aggregatträger mittelbar oder unmittelbar angeordneter, behälterförmiger Kettenspeicher zugeordnet ist, in dem das freie Ende der Zugkette aufgenommen werden kann. Dieser Kettenspeicher ist bevorzugt so dimensioniert, dass das freie Ende der Zugkette dort, je nach dem Absenkzustand des Aggregats und damit der vorhandenen Kettenlänge des freien Kettenendes mäanderförmig bzw. schlaufenförmig zusammengelegt aufgenommen ist. Auf jeden Fall ist mit einem derartigen Kettenspeicher sichergestellt, dass selbst im schlaufenförmig bzw. mäanderförmig zusammengelegten Zustand des freien Kettenendes dieses kraftentlastet ist, so dass dieses, anders als bei einer Seiltrommel, dort kraftfrei aufgenommen ist und die einzelnen Bereiche nicht gegeneinander verklemmt bzw. verpresst werden. Anders als bei einer Seiltrommel kommt es daher bei der Verwendung eines Kettenspeichers und der über ein Antriebs- bzw. Kettenrad geführten Zugkette zu keiner unerwünscht hohen und den Verschleiß fördernden Beanspruchung der Zugkette.

Gemäß einer weiteren besonders bevorzugten Ausgestaltung der vorliegenden Erfindungsidee ist vorgesehen, dass, vorzugsweise in Hochachsenrichtung (Behälterhochachsenrichtung oder Aggregatträger-Hochachsenrichtung) oberhalb des Antriebs- bzw. Kettenrades, wenigstens ein ein- oder mehrteiliges Leitelement, zum Beispiel wenigstens ein Leitblech, wenigstens eine Führungsrolle, wenigstens eine Leitbacke oder dergleichen, vorgesehen ist, das einen solchen definierten Spaltabstand zum Antriebsrad aufweist, dass die Zugkette dauerhaft in Eingriff mit dem Antriebsrad gehalten ist und nicht außer Eingriff mit diesem gelangen kann. Zum Beispiel kann das Führungs- und/oder Leitelement so ausgebildet sein, insbesondere so mehrteilig ausgebildet sein, dass dieses eine Austrittsöffnung oder einen Austrittspalt für hochgezogene Feststoffe ausbildet, über den die hochgezogenen Verunreinigungen, wie zum Beispiel Faserstoffe, aus dem Bereich des Umschlingungstriebes austreten und abgesondert werden können. Ein derartiges Leitelement kann somit grundsätzlich auf unterschiedliche Weise ausgebildet sein. Bevorzugt ist jedoch auf jeden Fall stets eine Ausgestaltung, bei der das Leitelement das als Kettenrad ausgebildete Antriebsrad im Wesentlichen über einen Großteil oder auch den gesamten Eingriffsbereich überdeckt, um sicherzustellen, dass auch stets die gewünschte Zähnezahl des Kettenrades in Eingriff mit dem zugeordneten Eingriffsbereich der Zugkette steht.

Gemäß einer besonders bevorzugten Ausgestaltung ist vorgesehen, dass das Antriebsrad und der Kettenspeicher, sowie gegebenenfalls eine Antriebseinrichtung für das Antriebsrad, Bestandteil einer Montageeinheit sind, die als separates Bauteil mit dem Aggregatträger mittels zum Beispiel wenigstens einer Befestigungseinrichtung fest verbunden werden kann. Eine derartige Montageeinheit erlaubt zum einen die einfache Montage und zum anderen aber auch den einfachen Austausch bestehender Höhenverstellvorrichtungen und somit den Ersatz derselben durch die erfindungsgemäße Höhenverstelleinrichtung. Beispielsweise kann hierzu im Rahmen der Montageeinheit ein Montageelement, zum Beispiel eine Montageplatte, vorgesehen sein, an der Antriebsrad und Kettenspeicher sowie gegebenenfalls die Antriebseinrichtung gehaltert sind, welches Montageelement dann einen Anschlussbereich zur Festlegung am Aggregatträger aufweist. Mit einer derartigen Montageeinheit kann somit die erfindungsgemäße Lösung auf einfache und funktionssichere Weise verbaut bzw. nachgerüstet werden.

Das Antriebsrad und der Kettenspeicherkönnen grundsätzlich im Behälterinnenraum des Fermenterbehälters angeordnet sein, wobei das Antriebsrad oder eine mit dem Antriebsrad wirkverbundene Antriebseinrichtung mittels einer Betätigungseinrichtung von außerhalb des Fermenterbehälters betätigt werden kann. Die Antriebseinrichtung selbst, zum Beispiel ein Antriebsmotor, kann sowohl außerhalb als auch innerhalb des Fermenterbehälters angeordnet sein. Eine derartige Anordnung im Behälterinnenraum umfasst ausdrücklich Behälterausgestaltungen, bei der die Anordnung der erfindungsgemäßen Höhenverstelleinrichtung in einem domartigen Bereich eines Serviceschachts erfolgt. Alternativ dazu kann das Antriebsrad und der Kettenspeicher sowie gegebenenfalls eine Antriebseinrichtung für das Antriebsrad auch außerhalb des Fermenterbehälters angeordnet sein, so dass dann die Gelenkkette durch einen Behälterwandbereich des Fermenterbehälters gasdicht in den Behälterinnenraum zum dort aufgenommenen Aggregat geführt ist. Eine derartige gasdichte Gelenkkettendurchführung lässt sich auf einfache Weise bewerkstelligen. Letzteres gilt auch für den Fall, dass der Aggregatsträger verdrehbar, das heißt um seine Längsachse verdrehbar gelagert sein sollte. In diesem Fall ist dann bevorzugt vorzusehen, dass der Aggregatträger ein gasdicht oder integral damit verbundenes, zusammen mit diesem verdrehbares Wandelement des Fermenterbehälters aufweist, durch das die Gelenkkette hindurchgeführt ist und das gasdicht verdrehbar zu dem daran anschließenden Wandbereich des Fermenterbehälters ausgebildet ist. Alternativ dazu kann auch vorgesehen sein, dass die gasdichte Gelenkkettendurchführung entsprechend einem vorgegebenen Schwenkbereich schlitzförmig ausgebildet ist.

Sämtlichen Ausführungsformen ist gemein, dass dem Antriebsrad eine vorzugsweise elektrisch, hydraulisch, pneumatisch oder manuell betreibbare Antriebsvorrichtung zugeordnet sein kann, mittels der das Antriebsrad auf einfache Weise mittelbar oder unmittelbar drehangetrieben werden kann. Gemäß einer hierzu besonders bevorzugten Ausführungsform ist vorgesehen, dass das Antriebsrad Bestandteil einer Antriebswelle ist, die ferner ein Antriebsritzel aufweist, das mit einem Getriebe zusammenwirkt, das das Antriebsritzel und damit das Antriebsrad antreibt. Ein derartiger Aufbau ermöglicht viele konstruktive Freiheiten und ist zudem sehr funktionssicher in der täglichen Praxis sowie in der Bedienung. Dies trifft vor allem auf den besonders bevorzugten Fall zu, dass das Getriebe Bestandteil einer Hohlwellenanordnung ist, bei der in einer, gegebenenfalls ein Deckenwand-Drehlager ausbildenden und/oder gegebenenfalls Bestandteil des Aggregatträgers bildenden, Hohlwelle eine Antriebswelle drehbar gelagert ist, die einen mit dem Antriebsritzel mittelbar oder unmittelbar kämmenden Eingriffsbereich aufweist. Zudem ist diese Antriebswelle bevorzugt mit einem freien Ende aus dem Fermenterbehälter herausgeführt. Vor allem letzteres ermöglicht auf besonders einfache und bedienungssichere Weise das Vorsehen eines die Antriebswelle antreibenden Antriebsmotors, der durch eine Betätigungseinrichtung betätigbar ist. Grundsätzlich kann ein derartiges Getriebe auf vielfache Weise ausgebildet sein. Besonders bevorzugt ist jedoch vorgesehen, dass das Getriebe ein Schneckentrieb mit einer Schneckenwelle als Antriebswelle ist, deren Eingriffsbereich durch ein Schneckengewinde gebildet ist. Ein derartiger Schneckentrieb ist besonders robust und weist eine vorteilhafte Selbsthemmung auf, die sicherstellt, dass eingestellte Höhenpositionen des Aggregates funktionssicher gehalten werden können.

Die Erfindung wird nachfolgend anhand einer Zeichnung näher erläutert.

Es zeigen:
- Fig. 1: eine schematische Teilansicht eines Fermenterbehälters einer Biogasanlage mit einem darin vertikal gelagerten Aggregatträger und einer ersten Ausführungsform einer erfindungsgemäßen Höhenverstelleinrichtung,
- Fig. 2a: eine zur Fig. 1 alternative Ausführungsform,
- Fig. 2b: schematisch eine vergrößerte Detailansicht in Richtung des Pfeils C der Fig. 2a,
- Fig. 3a: schematisch eine vergrößerte Detailansicht des Kettenrads mitsamt Gelenkkette, Kettenspeicher und Kettenleitelement,
- Fig. 3b: schematisch eine Schnittansicht durch das obere, als Hohlwellenanordnung ausgebildete Drehlager des Aggregatträgers gemäß Fig. 1,
- Fig. 3c: schematisch eine zur Fig. 3b alternative Ausführungsform mit einem im Fermenterbehälter angeordneten Antriebsmotor,
- Fig. 3d: schematisch eine Schnittansicht entlang der Linie B-B der Fig. 3a bei einer Ausführungsform entsprechend Fig. 3c,
- Fig. 4a: schematisch eine beispielhafte Darstellung eines Kettenbereichs einer zum Beispiel als Rollenkette ausgebildeten Gelenkkette, und
- Fig. 4b: eine um 90° gekippte Anordnung des Kettenbereichs der Fig. 4a.

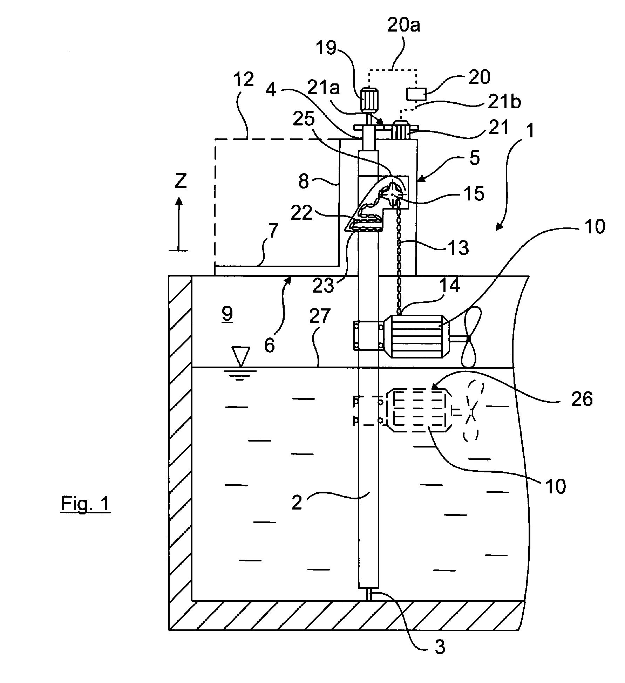

In der Fig. 1 ist beispielhaft und schematisch eine Teilansicht eines Fermenterbehälters 1 einer Biogasanlage gezeigt, in dem ein Aggregatträger 2 vertikal ausgerichtet gelagert ist.

Der Aggregatträger 2 kann grundsätzlich auf unterschiedliche Weise ausgebildet sein, zum Beispiel rund. In der hier gezeigten Ausführungsform ist der Aggregatträger 2 durch ein Quadratleitrohr mit quadratischem Querschnitt gebildet.

Der Aggregatträger 2 ist drehbar, das heißt um seine Längsachse drehbar im Fermenterbehälter 1 gelagert. Hierzu weist der Aggregatträger 2 ein unteres Drehlager 3 sowie ein oberes Drehlager 4 auf. Das untere Drehlager 3 ist im Bereich der Fermenterbehälter-Bodenwand gelagert und ausgebildet, während das obere Drehlager 4 hier beispielhaft in einer Deckenwand eines L-Serviceschachtes 5 gelagert und ausgebildet ist. Dieser L-Serviceschacht 5 überdeckt eine hier nicht im Detail dargestellte deckenwandseitige Serviceöffnung 6 des Fermenterbehälters 1, damit keine Gase aus dem Behälterinnenraum 9 in die Umgebung entweichen können. Der L-Serviceschacht 5 weist zum Beispiel zwei Wandplatten 7, 8 auf, die im Servicefall vom L-Serviceschacht 5 abgenommen werden können, so dass über die Serviceöffnung 6 ein Zugang in den Fermenterbehälterinnenraum 9 ermöglicht wird.

Im Servicefall kann dann das am Aggregatträger 2 höhenverstellbar gelagerte Aggregat 10, das hier beispielhaft durch ein Tauchmotorrührgerät gebildet ist, durch Verschwenken des Aggregatträgers 2 um dessen Längsachse aus der in der Bildebene der Fig. 1 gezeigten rechten Position um 180° nach links geschwenkt werden, und anschließend durch Betätigen der nachfolgend noch näher erläuterten Höhenverstelleinrichtung 11 so weit nach oben angehoben werden, dass das Aggregat 10 über die Serviceöffnung 6 zugänglich ist bzw. durch die Serviceöffnung 6 hindurch nach außerhalb des Fermenterbehälters 1 verlagert werden kann.

Anstelle eines L-Serviceschachts 5, wie er in der Fig. 1 gezeigt ist, kann auch ein kastenförmiger Serviceschacht 12 vorgesehen sein, wie er in der Fig. 1 lediglich strichliert eingezeichnet ist, in den das Aggregat 10 zu Service- und Reparaturarbeiten hinein bewegt werden kann und der zum Beispiel über eine Zugangstür oder Zugangsklappe zugänglich ist.

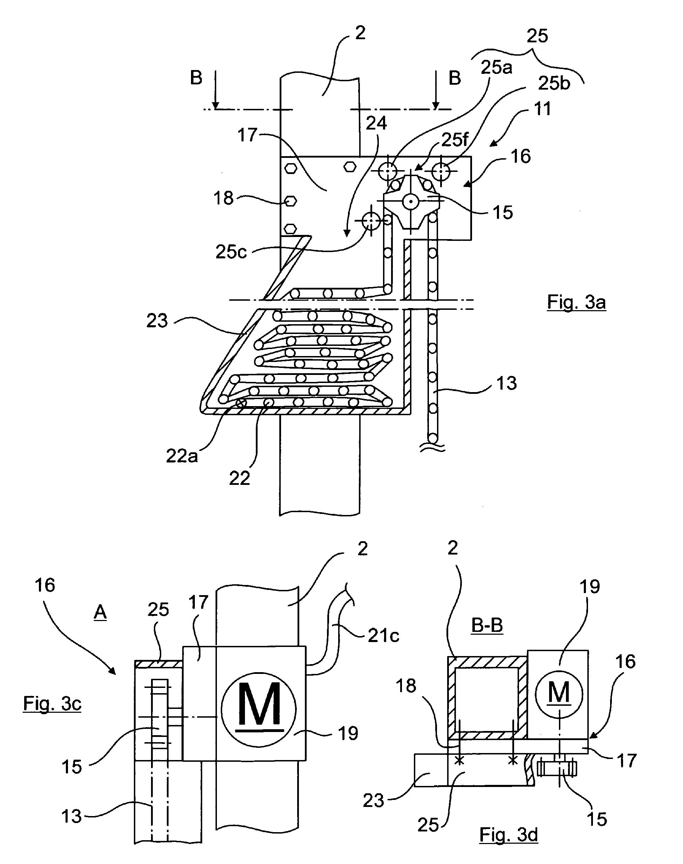

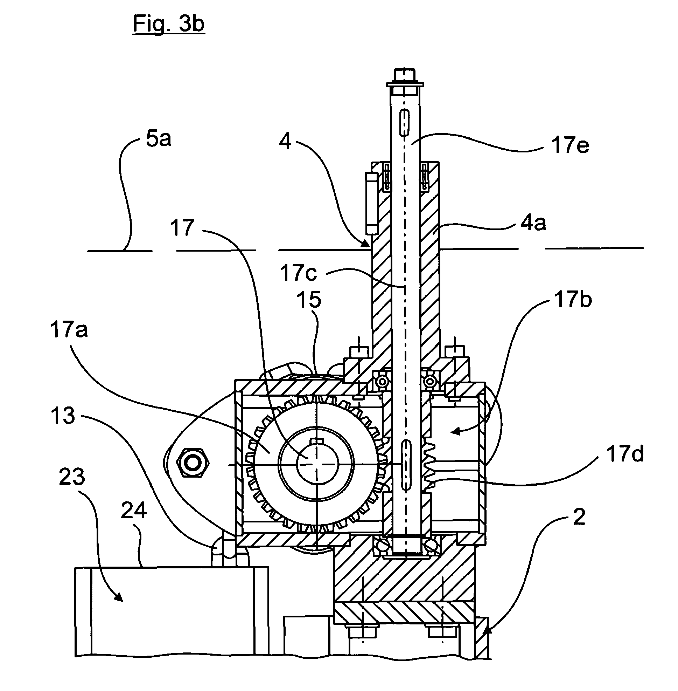

Wie dies der Fig. 1 in Zusammenschau mit der (zum Teil eine beispielhafte alternative Ausgestaltung zeigenden) Fig. 3a sowie der eine vergrößerte Detail- und Schnittansicht des Bereichs um das Drehlager 4 zeigenden Fig. 3b entnommen werden kann, weist die Höhenverstelleinrichtung 11 hier beispielhaft eine lediglich eindimensional bewegliche Gelenkkette 13 als Zugkette auf, die über ein im oberen Behälterbereich bzw. im L-Serviceschacht 5 am Aggregatträger 2 drehbar gelagertes Kettenrad 15 als Antriebsrad geführt ist, dessen Zähne, wie dies der Fig. 3a entnommen werden kann, im wesentlichen formschlüssig in die Kettenzwischenräume der Gelenkkette 13 eingreifen. Weiter ist die Gelenkkette 13 mit einem ersten freien Endbereich mit dem Aggregat 10 an einem Anbindungspunkt 14 verbunden.

Wie dies insbesondere der Fig. 3a entnommen werden kann, kann das Kettenrad 15 Bestandteil einer Montageeinheit 16 sein, die zum Beispiel ein Montageelement 17 umfasst, das zum Beispiel mittels mehrerer Befestigungsschrauben 18 fest mit dem Aggregatträger 2 verbunden ist.

Das Montageelement 17 weist das dort drehbar gelagerte Kettenrad 15 auf. Auf einer das Kettenrad 15 tragenden Antriebswelle 17 ist ferner ein Antriebsritzel 17a gelagert (Fig. 3b), das mit einem Schneckentrieb 17b zusammenwirkt, der das Antriebsritzel 17a und damit das Kettenrad 15 antreibt. Der Schneckentrieb 17b ist Bestandteil einer Hohlwellenanordnung, bei der in einer das Deckenwand-Drehlager 4 ausbildenden und Bestandteil des Aggregatträgers 2 bildenden Hohlwelle 4a eine Schneckenwelle 17c drehbar gelagert ist, die ein hier mit dem Antriebsritzel 17a direkt und unmittelbar kämmendes Schneckengewinde 17d aufweist (auch die Zwischenschaltung eines oder mehrerer Zahnräder wäre selbstverständlich möglich) und mit einem freien Ende 17e aus dem Fermenterbehälter, der in der Fig. 3b beispielhaft durch die strichliert eingezeichnete Deckenwand 5a des Serviceschachtes 5 gebildet ist, herausgeführt ist. Dort ist ein die Schneckenwelle 17c antreibender Antriebsmotor 19 (Fig. 1) vorgesehen, der hier lediglich äußerst schematisch und beispielhaft dargestellt ist. Dieser Antriebsmotor 19 kann durch eine Betätigungseinrichtung 20, die ebenfalls außerhalb des Fermenterbehälters 1 angeordnet ist, betätigt werden, wozu der Antriebsmotor 19 mittels einer hier strichliert dargestellten Signalleitung 21 a verbunden ist. Es versteht sich, dass der Antriebsmotor 19 mitsamt Schneckenwelle 17c so ausgebildet ist, dass die Schneckenwelle 17c und damit das Antriebsritzel 17a und das Kettenrad 15 sowohl in die eine als auch in die andere Richtung drehangetrieben werden kann.

Ferner ist außerhalb des Fermenterbehälters 1 auch noch ein weiterer Antriebsmotor 21 angeordnet (Fig.1), mittels dem über eine hier nicht weiter dargestellte Getriebeanordnung 21 a die mit dem Aggregatträger 2 fest verbundene Hohlwelle 4a und damit der Aggregatträger 2 verschwenkt werden kann. Die Ansteuerung des Antriebsmotors 21 erfolgt ebenfalls über die Betätigungseinrichtung 20 mittels einer Signalleitung 21 b. Es sei an dieser Stelle ausdrücklich erwähnt, dass die Verschwenkung des Aggregatträgers 2 alternativ auch manuell, zum Beispiel über einen Schwenkhebel erfolgen kann, was hier aber nicht dargestellt ist. Ebenso könnte auch die Schneckenwelle 17c manuell angetrieben werden, zum Beispiel mit einer Handkurbel, was aber hier nicht dargestellt ist.

Alternativ zur Hohlwellenanordnung und Anordnung des Antriebsmotors 19 außerhalb des Fermenterbehälters 1 kann gemäß einer in den Fig. 3a, 3c und 3d gezeigten alternativen Ausgestaltung vorgesehen sein, dass der zum Beispiel elektrisch, pneumatisch oder hydraulisch betriebener Antriebsmotor 19 innerhalb des Fermenterbehälters 1 angeordnet ist, zum Beispiel an dem Montageelement 17 und/oder am Aggregatträger 2 gehaltert ist, der einen Drehantrieb für das Kettenrad 15 ausbildet. Dieser Antriebsmotor 19 ist beispielsweise über eine Verrohrung bzw. Verschlauchung oder Verkabelung 21 c mit der außerhalb des Fermenterbehälters 1 angeordneten Betätigungseinrichtung 20 gekoppelt, so dass bei einer Betätigung der Betätigungseinrichtung 20 der Antriebsmotor 19 und damit das Kettenrad 15 drehangetrieben wird.

Wie dies der Fig. 1 insbesondere in Zusammenschau mit der Fig. 3a zudem weiter entnommen werden kann, ist am Aggregatträger 2, bevorzugt an der Montageeinheit 16, ein, einen Aufnahmebehälter für das freie Kettenende 22 ausbildender Kettenspeicher 23 angeordnet, dessen Aufnahmeöffnung 24 dem Kettenrad 15 so zugeordnet ist, dass das freie Kettenende 22 darin - je nach Hubhöhe des Aggregats 10 im Fermenterbehälter 1 - mit mehr oder weniger Schlaufen zugkraftentlastet aufgenommen ist.

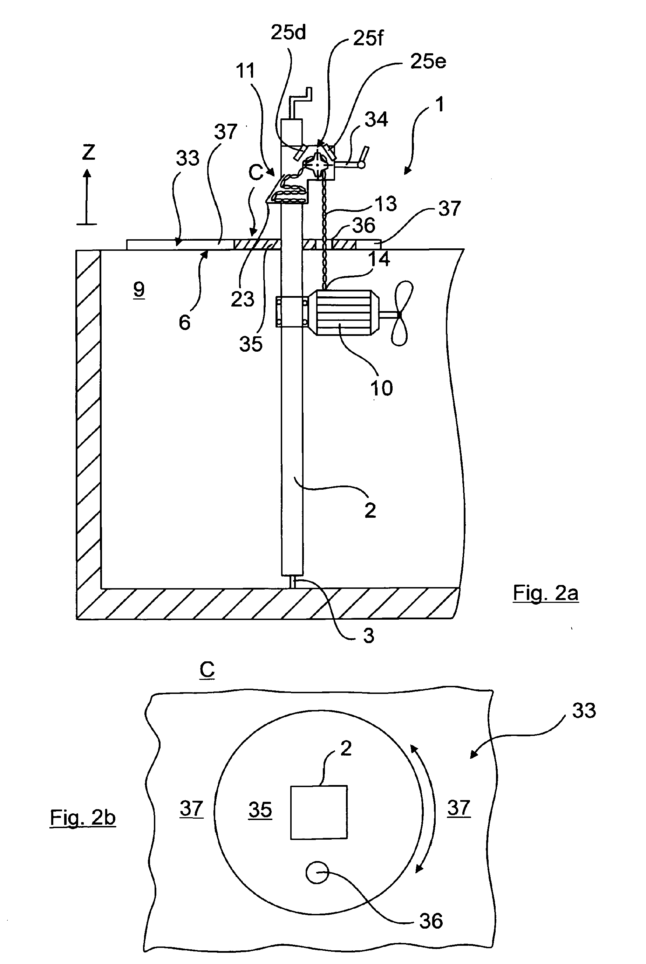

In Hochachsenrichtung z oberhalb des Kettenrades 15 ist ein Leitelement 25 vorgesehen, das zum Beispiel durch ein Leitblech oder dergleichen gebildet sein kann, wie dies in der Fig. 1 lediglich beispielhaft und schematisch dargestellt ist. Das Leitelement 25 kann aber alternativ auch durch mehrere, vorzugsweise drehbar gelagerte Führungsrollen 25a, 25b, wie dies in der Fig. 3a beispielhaft und schematisch dargestellt ist, oder alternativ durch fest angeordnete Führungs- und/oder Leitbacken 25d, 25e, wie sie in der Fig. 2a beispielhaft und schematisch dargestellt sind, gebildet sein. Jedes dieser ein- oder mehrteiligen Leitelemente 25 weist einen definierten Spaltabstand zum Kettenrad 15 auf, dergestalt, dass die Gelenkkette 13 dauerhaft in einer Eingriffsverbindung mit dem Kettenrad 15 gehalten ist.

Mit der mehrteiligen Ausgestaltung des Leitelementes 25 kann eine Austrittsöffnung 25f oder ein Austrittspalt für hochgezogene Feststoffe ausgebildet, über den die eventuell durch die Gelenkkette 13 hochgezogenen Verunreinigungen, wie zum Beispiel Faserstoffe, aus dem Bereich des Umschlingungstriebes austreten und abgesondert werden können.

Weiter kann das freie Kettenende 22 im Bereich eines Endgliedes eine Auszugsblockiereinrichtung 22a, zum Beispiel eine Schaftschraube mit Mutter und Schraubenkopf, aufweisen, die bei einem Ausziehen der Gelenkkette 13 aus dem Kettenspeicher 23 im Zusammenwirken mit einer Führungsrolle 25c dafür sorgt, dass die Auszugsblockiereinrichtung 22a dann dort auf Block geht und somit das vollständige Ausziehen der Gelenkkette 13 zuverlässig vermieden wird. Bevorzugt ist hier auch noch eine Abschaltvorrichtung vorgesehen, die das Blockieren erfasst und den Kettenradantrieb dann sofort abschaltet. Alternativ oder zusätzlich zu einer derartigen Auszugsblockiereinrichtung 22a kann die Gelenkkette 13 aber auch so lange gewählt sein, dass deren Ausfädeln bei maximal nach unten verlagertem Aggregat 10 zuverlässig verhindert wird, also zum Beispiel die Länge der Gelenkkette 13 deutlich größer ist als die maximale Absenkstrecke des Aggregates 10.

Soll nun das Aggregat 10, wie in der Fig. 1 schematisch dargestellt, aus der mit durchgezogenen Linien gezeigten angehobenen Position nach unten in den Fermenterbehälter 1 abgesenkt werden, wird über die Betätigungseinrichtung 20 der Antriebsmotor 19 für eine vorbestimmte Zeitdauer so angesteuert, dass dieser das Kettenrad 15 im Uhrzeigersinn solange verdreht, bis das Aggregat 10 in die gewünschte, hier beispielhaft mit strichlierten Linien dargestellte abgesenkte Position 26 abgesenkt ist. Ist die gewünschte Position erreicht, wird der Antriebsmotor 19 gestoppt und damit das Kettenrad 15 angehalten, wodurch das Aggregat 10 sicher in der gewünschten abgesenkten Position 26 gehalten wird. Während des Absenkens wird dabei über das Kettenrad 15 eine entsprechende, für das Absenken benötigte Kettenlänge des freien Kettenendes 22 geführt aus dem Kettenspeicher 23 entnommen.

Es versteht sich, dass die Länge der Gelenkkette 13 selbstverständlich so vorgegeben ist, dass damit sämtliche gewünschten Höhenpositionen des Aggregats 10 im Fermenterbehälter 1 eingenommen werden können.

Soll das Aggregat 10 dann von der in der Fig. 1 strichliert dargestellten abgesenkten Position 26 wieder in die mit durchgezogenen Linien dargestellte höhere Position angehoben werden, wird wiederum über die Betätigungseinrichtung 20 der Antriebsmotor 19 angesteuert, und zwar diesmal so, dass das Kettenrad 15 im Gegenuhrzeigersinn gedreht wird, wodurch wiederum die Gelenkkette 13 nach oben gezogen und entsprechend das freie Kettenende 22 im Kettenspeicher 23 kraftfrei und belastungsfrei aufgenommen bzw. eingelagert wird.

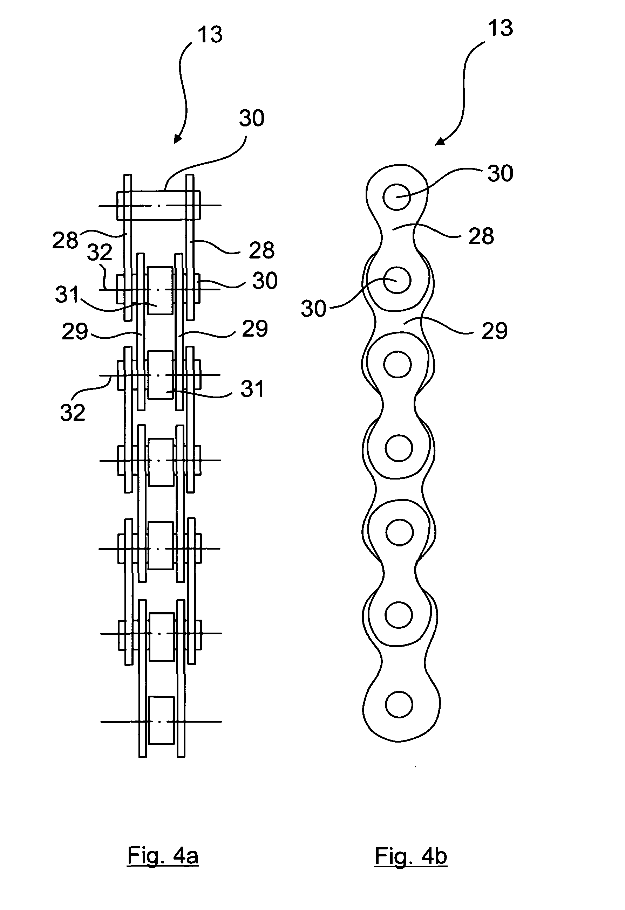

Wie dies insbesondere der Fig. 4a und der Fig. 4b entnommen werden kann, kann die Zugkette hier durch eine eindimensional bewegliche Gelenkkette 13 gebildet sein, deren Gelenkachsen 32 im Wesentlichen achsparallel zur Drehachse des Kettenrades 15 ausgerichtet sind, wodurch eine zuverlässige Führung des Aggregats 10 sowohl beim Anheben als auch beim Absenken erzielt wird. Insbesondere wird mit einer derartigen Gelenkkette 13 sichergestellt, dass eventuell vorhandene Schwimm- bzw. Schaumschichten 27, die in der Fig. 1 lediglich äußerst schematisch und beispielhaft dargestellt sind, beim Absenken des Aggregats 10 zuverlässig durchdrungen werden können, da die Gelenkkette 13, anders als ein insgesamt biegeschlaffes Seil, keine großen Ausweichbewegungen des Aggregats erlaubt und somit das Durchdringen der Schwimmschicht 27 kontrollierter erfolgen kann.

Zudem ermöglicht eine derartige Gelenkkette 13 als Zugkette im Betrieb des Aggregats 10 eine Stabilisierung desselben, was sich vorteilhaft auf das zum Beispiel Rührergebnis auswirkt.

Wie die Fig. 4a und 4b zeigen, ist die Gelenkkette hier beispielhaft gebildet durch Außenlaschen 28, die über Bolzen 30 miteinander verbunden und voneinander beabstandet sind. An den Bolzen 30 sind Innenlaschen 29 schwenkbar gelagert, wobei zwischen den beiden Innenlaschen auf den Bolzen 30 jeweils Rollen 31 drehbar gelagert sind. Mit einem derartigen beispielhaften Aufbau einer Gelenkkette 13 wird somit eine vorteilhafte Biegesteifigkeit in Richtung der Gelenkachsen 32 sowie in gewissem Maße auch in Kettenlängsrichtung erzielt. Lediglich um die Gelenkachsen 32 herum wird die Gelenkigkeit in gewünschtem Maße bereitgestellt.

Mit einer derartigen Gelenkkette 13 als Zugkette einer Höhenverstelleinrichtung wird somit eine gewünschte Querstabilisierung und Führungsstabilisierung eines Aggregats bei dessen Höhenverstellung ermöglicht, was sich sowohl positiv auf den Absenk- als auch auf den Anhebvorgang auswirkt und zudem auch positive Auswirkungen auf das Rührergebnis mit dem zum Beispiel als Tauchmotorrührgerät ausgebildeten Aggregat 10 zur Folge hat.

Es sei an dieser Stelle jedoch ausdrücklich erwähnt, dass in dem zuvor beschriebenen Ausführungsbeispiel, ebenso wie in sämtlichen nachfolgend beschriebenen Ausführungsbeispielen, anstelle einer Gelenkkette selbstverständlich auch eine mehrdimensional bewegliche Kette, zum Beispiel eine Gliederkette, wie beispielsweise eine Rundgliederkette, verwendet werden kann.

In der Fig. 2a ist eine weitere alternative Ausführungsform gezeigt, bei der der Fermenterbehälter 1 deckenwandseitig keinen Serviceschacht aufweist, sondern lediglich eine die Serviceöffnung 6 abdeckende Abdeckplatte 33 oder dergleichen. Das obere Drehlager 4 ist hier dann im Bereich der Abdeckplatte 33 ausgebildet. Das Kettenrad 15, der Kettenspeicher 23 und auch die hier lediglich beispielhaft als Handkurbel 34 ausgebildete Antriebseinrichtung für das Kettenrad 15 sind hier außerhalb des Fermenterbehälters 1 angeordnet. Es versteht sich, dass anstelle der Handkurbel 34 selbstverständlich auch ein Antriebsmotor 19, wie vorstehend beschrieben, verwendet werden kann.

Bei einem derartigen Aufbau ist dann die Gelenkkette 13 durch die Abdeckplatte 33 hindurch gasdicht in den Fermenterbehälter-Innenraum 9 zum dort aufgenommenen Aggregat 10 zu führen. Die gasdichte Durchführung 36 kann hierbei auf unterschiedliche Weise erfolgen, zum Beispiel mittels einer Elastomerdichtung und/oder einer Schmiermitteldichtung, etc. um nur einige Beispiele zu nennen.

Für den Fall, dass auch hier wiederum vorgesehen sein sollte, dass der Aggregatträger 2 um seine Längsachse drehbar im Fermenterbehälter 1 gelagert sein sollte, wäre der Aggregatträger 2 vorzugsweise mit einem hier deckelförmigen Wandelement 35 zu koppeln, durch das die Gelenkkette 13 gasdicht hindurchzuführen wäre (Durchführstelle 36), wobei das hier deckelförmige Wandelement 35 dann gasdicht verdrehbar zu dem daran anschließenden Wandbereich 37 der Abdeckplatte 33 auszuführen ist. Dies ist insbesondere aus der Fig. 2b gut ersichtlich, die eine Draufsicht entsprechend des Pfeils C der Fig. 2a zeigt.

Es versteht sich weiter, dass die erfindungsgemäße Lösung selbstverständlich mit jeder Art von Behältern bzw. Fermenterbehältern einsetzbar ist, das heißt insbesondere auch mit Fermenterbehältern mit einer festen, horizontalen Deckenwand als auch mit Fermenterbehältern mit einem Foliendach oder dergleichen.

## Patentansprüche

1. Biogasanlage
mit einem Fermenterbehälter (1), in dem ein Aggregatträger (2), vorzugsweise vertikal ausgerichtet, gelagert ist, wobei ein Aggregat (10), insbesondere ein Tauchmotorrührgerät, mittels einer Höhenverstelleinrichtung (11) höhenverstellbar an dem Aggregatträger (2) gehaltert ist,
**dadurch gekennzeichnet,**
**dass** die Höhenverstelleinrichtung (11) eine Zugkette aufweist, die über wenigstens ein drehbar gelagertes Antriebsrad (15), insbesondere ein Kettenrad, geführt ist und die mit dem Aggregat (10) dergestalt verbunden ist, dass das Aggregat (10) bei einer Drehbetätigung des Antriebsrades (15) in eine erste Richtung nach oben gezogen wird und bei einer Drehbetätigung des Antriebsrades (15) in eine zweite, entgegengesetzte Richtung nach unten abgesenkt wird.

2. Biogasanlage nach Anspruch 1, **dadurch gekennzeichnet, dass** die Zugkette durch eine lediglich eindimensional bewegliche Gelenkkette (13) gebildet ist.

3. Biogasanlage nach Anspruch 2, **dadurch gekennzeichnet, dass** die Gelenkachsen (32) der Gelenkkette (13) achsparallel zur Drehachse des Antriebsrades (15) ausgerichtet sind, und/oder dass die Gelenkkette (13) durch eine Rollenkette oder durch eine Buchsenkette oder durch eine Bolzenkette gebildet ist.

4. Biogasanlage nach einem der vorhergehenden Ansprüche, **dadurch gekennzeichnet, dass** dem Antriebsrad (15) ein behälterförmiger Kettenspeicher (23) zugeordnet ist, in dem das freie Ende (22) der Zugkette (13) aufnehmbar ist, insbesondere schlaufenförmig zusammengelegt aufnehmbar ist.

5. Biogasanlage nach Anspruch 4, **dadurch gekennzeichnet, dass** das Antriebsrad (15) mittelbar oder unmittelbar am Aggregatträger (2) angeordnet ist, und
dass der Kettenspeicher (23) mit seiner Aufnahmeöffnung (24) dem Antriebsrad (15) zugeordnet ebenfalls mittelbar oder unmittelbar am Aggregatträger (2) angeordnet ist.

6. Biogasanlage nach einem der vorhergehenden Ansprüche, **dadurch gekennzeichnet, dass** dem Antriebsrad (15), vorzugsweise in Hochachsenrichtung (z) gesehen oberhalb des Antriebsrades (15), wenigstens ein ein- oder mehrteiliges Führungs- und/oder Leitelement (25) zugeordnet ist, das einen solchen definierten Spaltabstand zum Antriebsrad (15) aufweist, dass damit die Zugkette (13) dauerhaft in Eingriff mit dem Antriebsrad (15) gehalten ist und/oder ein außer Eingriff gehen der Zugkette (13) mit dem Antriebsrad (15) verhindert ist.

7. Biogasanlage nach Anspruch 6, **dadurch gekennzeichnet, dass** das Führungs- und/oder Leitelement (25) so, insbesondere zweigeteilt, ausgebildet ist, dass dieses eine Austrittsöffnung (25f) oder einen Austrittspalt für hochgezogene Feststoffe ausbildet.

8. Biogasanlage nach einem der Ansprüche 4 bis 7, **dadurch gekennzeichnet, dass** das Antriebsrad (15) und der Kettenspeicher (23) sowie gegebenenfalls eine Antriebseinrichtung (19) für das Antriebsrad (15) Bestandteil einer Montageeinheit (16) sind, die mit dem Aggregatträger (2) mittels wenigstens einer Befestigungseinrichtung (20) fest verbindbar ist.

9. Biogasanlage nach einem der Ansprüche 4 bis 8, **dadurch gekennzeichnet, dass** das Antriebsrad (15) und der Kettenspeicher (23), sowie gegebenenfalls eine Antriebseinrichtung für das Antriebsrad (15), im Behälterinnenraum (9) des Fermenterbehälters (1) angeordnet sind und das Antriebsrad (15) oder eine mit dem Antriebsrad (15) wirkverbundene Antriebseinrichtung (19) mittels einer Betätigungseinrichtung (20) von außerhalb des Fermenterbehälters (1) betätigbar ist.

10. Biogasanlage nach einem der Ansprüche 4 bis 8, **dadurch gekennzeichnet, dass** das Antriebsrad (15) und der Kettenspeicher (23) sowie gegebenenfalls eine Antriebseinrichtung (34) für das Antriebsrad außerhalb des Fermenterbehälters (1) angeordnet sind und die Zugkette (13) durch einen Behälterwandbereich des Fermenterbehälters (1) gasdicht in den Behälterinnenraum (9) zum dort aufgenommenen Aggregat (10) geführt ist.

11. Biogasanlage nach Anspruch 10, **dadurch gekennzeichnet, dass** im Falle eines verdrehbar gelagerten Aggregatträgers (2) vorgesehen ist, dass der Aggregatträger (2) ein gasdicht oder integral damit verbundenes, zusammen mit dem Aggregatträger (2) verdrehbares Wandelement (35) des Fermenterbehälters (1) aufweist, durch das die Zugkette (13) gasdicht hindurchgeführt ist und das gasdicht verdrehbar zu dem daran anschließenden Wandbereich (37) des Fermenterbehältes (1) ausgebildet ist oder dass die gasdichte Zugkettendurchführung (36) entsprechend einem vorgegebenen Schwenkbereich schlitzförmig ausgebildet ist.

12. Biogasanlage nach einem der vorhergehenden Ansprüche, **dadurch gekennzeichnet, dass** dem Antriebsrad (15) eine Antriebseinrichtung (19; 34), vorzugsweise eine elektrisch, hydraulisch, pneumatisch oder manuell betreibbare Antriebseinrichtung (19, 34), zugeordnet ist, mittels der das Antriebsrad (15) mittelbar oder unmittelbar drehantreibbar ist.

13. Biogasanlage nach Anspruch 15, **dadurch gekennzeichnet, dass** dem das Antriebsrad (15) Bestandteil einer Antriebswelle (17) ist, die ferner ein Antriebsritzel (17a) aufweist, das mit einem Getriebe (17b) zusammenwirkt, das das Antriebsritzel (17a) und damit das Antriebsrad (15) antreibt.

14. Biogasanlage nach Anspruch 13, **dadurch gekennzeichnet, dass** das Getriebe (17b) Bestandteil einer Hohlwellenanordnung ist, bei der in einer, bevorzugt ein Deckenwand-Drehlager (4) ausbildenden und/oder Bestandteil des Aggregatträgers (2) bildenden, Hohlwelle (4a) eine Antriebswelle (17c) drehbar gelagert ist, die einen mit dem Antriebsritzel (17a) mittelbar oder unmittelbar kämmenden Eingriffsbereich (17d) aufweist und vorzugsweise mit einem freien Ende (17e) aus dem Fermenterbehälter (1) herausgeführt ist, wobei bevorzugt ein die Antriebswelle (17c) antreibender Antriebsmotor (19) vorgesehen ist, der durch eine Betätigungseinrichtung (20) betätigbar ist.

15. Biogasanlage nach Anspruch 14, **dadurch gekennzeichnet, dass** das Getriebe (17b) ein Schneckentrieb mit einer Schneckenwelle als Antriebswelle (17c) ist, deren Eingriffsbereich (17d) durch ein Schneckengewinde gebildet ist.
